# EUROPÄISCHE PATENTSCHRIFT

(11) **EP 0 529 262 B1**
(45) Veröffentlichungstag und Bekanntmachung des Hinweises auf die Patenterteilung: **15.11.1995**
(21) Anmeldenummer: 92111777.6
(22) Anmeldetag: 10.07.1992
(51) Int. Cl.: B60H 1/32, F16L 37/00

(54) **Wasserabführstutzen zum Einbau in einen Hohlträger**
Drain pipe for mounting through a pillar
Tuyau d'évacuation d'eau pour le montage dans un montant de véhicule

(30) Priorität: 27.08.1991 DE 4128199
(43) Veröffentlichungstag der Anmeldung: 03.03.1993
(73) Patentinhaber: MERCEDES-BENZ AG, 70327 Stuttgart (DE)
(72) Erfinder: Zeibig, Peter, W-7033 Herrenberg (DE)

(56) Entgegenhaltungen:
- EP-A- 0 295 814
- EP-A- 0 299 262
- DE-A- 2 648 384
- FR-A- 2 624 809
- GB-A- 1 145 896

## Beschreibung

Die Erfindung betrifft einen Wasserabführstutzen zum Einbau in einer Durchgangsöffnung eines Trägers gemäß dem Oberbegriff des Patentanspruchs 1.

Ein Wasserabführstutzen wird in einem Omnibus unter anderem dazu verwendet, Kondenswasser, das von einer Scheibe abläuft und sich in einer Rinne unter der Scheibe ansammelt, aus dieser Rinne durch den Wasserabführstutzen aus dem Fahrzeuginnenraum abzuführen. Der Wasserabführstutzen wird dazu unterhalb der Scheibe in einen zur Fahrzeugwand gehörenden Hohlträger eingesetzt, unter dem ein Wasserschlauch an den Wasserabführstutzen angeschlossen ist, der das Wasser aus dem Fahrzeug ableitet.

In der DE-A-26 48 384, durch die der Oberbegriff des Anspruchs 1 gebildet ist, ist ein Wasserabführstutzen beschrieben, der einen Schlauch mit einer Platte verbindet. Der Stutzenkörper ist in eine Bohrung der Platte eingesetzt und sitzt mit einem außenliegenden Bund auf dieser auf. Um ein Herausziehen des Wasserabführstutzens zu verhindern, hintergreifen an den Stutzenkörper außerhalb der Platte angesetzte Spreizarme Öffnungskanten in der Platte. Die Spreizarme benötigen Plattenöffnungen zusätzlich zur Eintrittsöffnung des rohrförmigen Stutzenkörpers und können zudem von außen zuganglich zusammengedrückt werden, wodurch ein unzulässiges Abziehen des Wasserabführstutzens jederzeit einfach möglich ist. Dieser Wasserabführstutzen ist nur dann an einem Hohlträger festzulegen, wenn dieser um die Durchgangsöffnung für den Stutzenkörper auch noch weitere, hintergreifbare Öffnungen für die Spreizarme aufweist.

Aus der EP-A-0 395 127 ist ein Wasserabführstutzen für ein Fahrzeug bekannt, der eine Wand durchsetzt und auf einer Seite dieser Wand mit einem Bund sichtbar aufsitzt. Auf der anderen Wandseite muß dieser Wasserabführstutzen durch ein zusätzliches Halteteil in der vorgesehenen Stellung verriegelt werden. Die Montage des Wasserabführstutzens ist nur dann möglich, wenn die andere Wandseite zugänglich ist.

Aus der EP-A-0 295 814 ist ein Wasserabführstutzen zu ersehen, der für die Festlegung in einem Hohlträger keine zuverlässige Festlegungsmöglichkeit bietet. Der rohrförmige Körper des Stutzens liegt an einem Absatz einer Bohrung, nur in einer Richtung dadurch axial gesichert an, und könnte, ohne daß hier nähere Angaben darüber gemacht wären, durch eine Verklebung oder eine Presspassung festgelegt werden. Beide Festlegungsmöglichkeiten sind zum Einbau in einen Hohlträger nicht ausreichend, da hier zu wenig Gegenfläche vom Rohrkörper zum Hohlträger in den Öffnungen vorhanden ist, um eine dauerhafte Verbindung herzustellen. Außerdem würden beide Festlegungsmöglichkeiten einen kostenintensiven Einbauaufwand bedingen.

Der Erfindung liegt die Aufgabe zugrunde, einen gattungsgemäßen Wasserabführstutzen derart zu gestalten, daß er von einer Seite aus in einen Hohlträger einbaubar und im Hohlraum des Hohlträgers weitgehend verdeckt in beiden axialen Richtungen abzustützen ist.

Die Aufgabe wird durch die kennzeichnenden Merkmale des Anspruchs 1 gelöst.

Durch den endseitigen Bund und die von diesem Bund entfernt angeordneten Spreizarme, deren Abstand jeweils mit dem Abstand der zu verbindenden Öffnungen eines Hohlträgers abgestimmt sind, kann der Stutzenkörper von einer Seite des Hohlträgers aus in diesen eingesetzt und dabei gleichzeitig darin abgestützt und gegen ein Herausziehen verriegelt werden. Die Spreizarme sind für das Hindurchführen durch eine der Öffnungen elastisch an den Stutzenkörper anlegbar und spreizen sich danach derart auf, daß eine an ihnen ausgearbeitete Abstützfläche im Wandbereich um diese Öffnung anliegt und so den Wasserabführstutzen zwischen den beiden Öffnungen des Kohlträgers hält. Eine sichere Abstützung des Stutzenkörpers im Hohlträger wird durch mehrere jeweils im Querschnitt gesehen gegenüberliegende Spreizarme erreicht.

Die Abstützflächen der Spreizarme können an den freien Enden der Spreizarme treppenförmig gestuft angeordnet sein, so daß die Spreizarme mit einem Treppenabsatz in die Öffnung eingreifen und dort mit einer Längs- und mit einer Radialfläche am Wandbereich des Hohlträgers anliegen. Mehrere Treppenabsätze ermöglichen einen Toleranzausgleich und lassen auch eine gewisse Variation des Abstands zwischen den beiden Öffnungen im Hohlträger zu.

Um den Wasserabführstutzen für unterschiedliche Hohlträger geeignet zu machen, deren Hohlraumabstände zwischen den Öffnungen stark voneinander differieren, sind am Stutzenkörper mehrere Gruppen von Spreizarmen entlang einer Längsachse des Stutzenkörpers angeordnet, welche jeweils zu einem vorgesehenen Hohlraumabstand eines Kohlträgers gehören. Dabei ist es vorteilhaft, daß zwei entlang einer Längsachse des Stutzenkörpers benachbarte Spreizarme im Querschnitt gesehen vom Stutzenkörper in dieselbe Richtung, jedoch nebeneinander angeordnet, d. h. ohne Längsüberdeckung, vom Stutzenkörper abkragen, so daß sich die Spreizarme bei einer Hindurchführung durch eine Öffnung des Kohlträgers nicht gegenseitig behindern.

Ein Ausführungsbeispiel der Erfindung ist in der Zeichnung dargestellt.

Es zeigen:
- Fig. 1:: eine Ansicht eines Wasserabführstutzens, der in zwei unterschiedlichen Hohlträgern eingebaut gezeichnet ist, und
- Fig. 2:: einen Querschnitt nur durch den Wasserabführstutzen entlang der Linie II-II der Fig. 1.

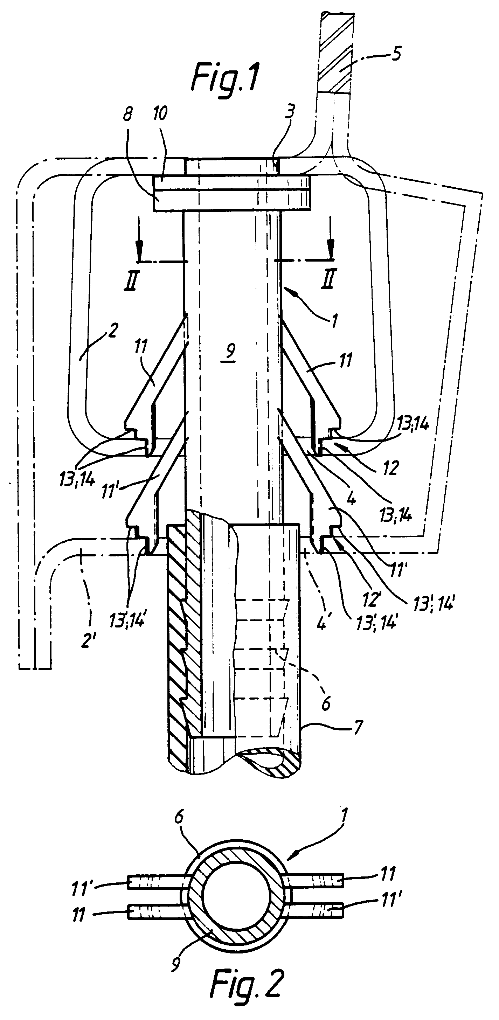

In Fig. 1 ist ein Wasserabführstutzen 1 dargestellt, der einmal in einen Hohlträger 2 und im gleichen Bild dargestellt auch in einen anderen, strichpunktiert gezeichneten Kohlträger 2' eingesetzt ist. Dieser Wasserabführstutzen 1 dient als Verbindung zwischen zwei gegenüberliegenden Öffnungen 3 und 4 bzw. 3 und 4' des Hohlträgers 2 bzw. 2' durch den Hohlträgerhohlraum hindurch. Der Wasserabführstutzen 1 kann z. B. von einer an den Hohlträger 2' anschließenden Fensterscheibe 5 eines nicht näher dargestellten Kraftfahrzeugs abfließendes Kondenswasser in einen Bereich unterhalb des Hohlträgers 2' ableiten. Dafür ist am unteren Ende des Wasserabführstutzens 1 ein mit umlaufenden Vorsprüngen versehenes Anschlußstück 6 vorgesehen, auf das ein Wasserleitungsschlauch 7 aufgesteckt ist.

Der Wasserabführstutzen 1 weist einen endseitigen Bund 8 auf, der ein Einführen eines Endes des Stutzenkörpers 9 in die im Durchmesser gleiche Öffnung 3 gestattet und dann eine weitere Axialbewegung durch seine Anlage am innenliegenden Wandbereich des Hohlträgers 2 sperrt. Hier ist zwischen dem Hohlträger 2 bzw. 2' und dem Bund 8 noch ein Dichtungsring 10 eingelegt, der einen Wasserdurchtritt in den Hohlträgerhohlraum außerhalb des Wasserabführstutzens 1 verhindert. Von diesem Bund 8 entfernt kragen vom Stutzenkörper 9 Spreizarme 11 und 11' ab, die elastisch auf den Stutzenkörper 9 zu bewegbar sind, und die an ihrem freien Ende 12 bzw. 12' Abstützflachen 13 bzw. 13' aufweisen, mit denen sie an dem die Öffnung 4 bzw. 4' umgebenden Wandbereich anliegen und ein Abziehen des Wasserabführstutzens 1 aus dem Hohlträger 2 bzw. 2' verhindern.

Der Wasserabführstutzen 1 wird durch die untenliegende Öffnung 4 bzw. 4' in den Hohlträger 2 bzw. 2' eingeführt, bis er mit seinem Ende passend in die Öffnung 3 ragt und der Bund 8 von innen am Hohlträger 2 bzw. 2' anliegt. Dabei sind die Spreizarme 11 und 11' elastisch am Stutzenkörper 9 angelegt. Nach dem Hindurchführen der Spreizarme 11 bzw. 11 und 11' durch die untere Öffnung 4 bzw. 4', spreizen sich die Spreizarme 11 und 11' wieder auf und legen sich mit ihren Abstützflächen 13 bzw. 13' an den Wandbereich um die Öffnung 4 bzw. 4' an. Der Wasserabführstutzen 1 liegt danach axial und radial unverschiebbar im Hohlträger 2 bzw. 2' fest.

Wie die Fig. 2 zeigt, sind die beiden Spreizarme 11 bzw. die beiden Spreizarme 11' jeweils im Querschnitt gesehen gegenüberliegend am Stutzenkörper 9 angeordnet, und vereinfachen dadurch ihre Handhabung beim Einführen in den Hohlträger 2 bzw. 2'.

Die Anordnung mehrerer Gruppen von Spreizarmen 11 bzw. 11' entlang einer Längsachse des Stutzenkörpers 9 ermöglicht es, wie in der Zeichnung gezeigt, daß ein und derselbe Wasserabführstutzen 1 in Hohlträger 2 bzw. 2' mit unterschiedlichen Abständen zwischen den Öffnungen 3 und 4 bzw. 3 und 4' einsetzbar ist. Um eine gegenseitige Behinderung mehrerer Gruppen von Spreizarmen 11 bzw. 11' zu vermeiden, kragen zwei entlang einer Längsachse des Stutzenkörpers 9 benachbarte Spreizarme 11 bzw. 11' im Querschnitt gesehen vom Stutzenkörper 9 in dieselbe Richtung, jedoch nebeneinander angeordnet, d. h. ohne Längsüberdeckung, ab.

Eine sichere Abstützung des Wasserabführstutzens 1 in den Hohlträgern 2 bzw. 2' ist dadurch begünstigt, daß die freien Enden der Spreizarme 11 bzw. 11' treppenförmig gestuft sind, so daß die Spreizarme 11 bzw. 11' jeweils mit einem Treppenabsatz 14 bzw. 14' in die Öffnung 4 bzw. 4' eingreifen können und dort mit einer Längs- und mit einer Radialfläche anliegen. Die Treppenabsätze 14 bzw. 14' ermöglichen einen Toleranzausgleich und lassen auch eine gewisse Variation des Abstands zwischen den beiden Öffnungen 3 und 4 bzw. 3 und 4' im Hohlträger 2 bzw. 2' zu.

## Patentansprüche

1. Wasserabführstutzen (1) zum Einbau in einer Durchgangsöffnung eines Trägers, mit einem radial erweiterten Bund (8) für eine axiale Abstützung am Wandbereich um eine Öffnung (3) und mit von diesem Bund (8) entfernt über den Umfang des Stutzenkörpers (9) verteilten, vom Stutzenkörper (9) abkragenden und auf diesen elastisch zu bewegbaren Spreizarmen (11 bzw. 11'), welche Abstützflächen (13, 13') zur axialen Abstützung in die Gegenrichtung aufweisen,
**dadurch gekennzeichnet,**
daß der Wasserabführstutzen (1) als Verbindung zwischen den zwei gegenüberliegenden Öffnungen (3 und 4 bzw. 4') eines Hohlträgers (2) dient, wobei der endseitige Bund (8) des Stutzenkörpers innenseitig eines Hohlträgers (2) am Wandbereich um die Öffnung (3) anlegbar ist, und die Spreizarme (11 bzw. 11') im Hohlträger (2) mit ihrem freien Ende gegen die andere Öffnung (4 bzw. 4') gerichtet und an deren Wandbereich innenseitig abstützbar sind.

2. Wasserabführstutzen nach Anspruch 1,
**dadurch gekennzeichnet,**
daß vom Stutzenkörper (9) mehrere jeweils im Querschnitt gesehen gegenüberliegende Spreizarme (11 bzw. 11') abkragen.

3. Wasserabführstutzen nach einem der Ansprüche 1 oder 2,
**dadurch gekennzeichnet,**
daß mehrere Gruppen von Spreizarmen (11 und 11') entlang einer Längsachse des Stutzenkörpers (9) angeordnet sind.

4. Wasserabführstutzen nach Anspruch 3,
**dadurch gekennzeichnet,**
daß zwei entlang einer Längsachse des Stutzenkörpers (9) benachbarte Spreizarme (11 und 11') im Querschnitt gesehen vom Stutzenkörper (9) in dieselbe Richtung, jedoch nebeneinander angeordnet, d. h. ohne Längsüberdeckung, abkragen.

5. Wasserabführstutzen nach Anspruch 1,
**dadurch gekennzeichnet,**
daß die freien Enden (12 bzw. 12') der Spreizarme (11 bzw. 11') treppenförmig gestuft sind, und daß die Spreizarme (11 bzw. 11') mit einem Treppenabsatz (14 bzw. 14') in die Öffnung (4 bzw. 4') eingreifen.

## Claims

1. Water extraction connection-pipe (1) for construction into a through-opening of a support carrier, with a radially extended collar (8) for an axial support on a wall area around an area (3) and with struts (11 and/or 11') which are separated from this collar (8) and are distributed over a periphery of a connection-pipe body, inclined at an angle from a connection-pipe body (9) and elastically movable towards a said pipe-connection body (9), and which have support surfaces (13, 13') for axial support in an opposite direction,
**wherein**
a water extraction connection-pipe (1) serves as a connection between two opposite openings (3 and 4 and/or 4') of a hollow support-carrier (2), whereby an end collar (8) of a connection-pipe body can be attached on a wall area around an opening (3), and struts (11 and/or 11') are aligned, with their free end, against another opening (4 and/or 4') and can be supported on an inner side of a wall area of a said opening (4 and/or 4').

2. Water extraction connection-pipe in accordance with claim 1,
**wherein**
several struts (11 and/or 11') which lie opposite each other as seen in a cross-sectional view, slope from a pipe-connection body (9).

3. Water extraction connection-pipe in accordance with any one of claims 1 or 2,
**wherein**
several struts (11 and 11') are disposed along a lengthwise axis of a connection-pipe body (9).

4. Water extraction connection-pipe in accordance with claim 3,
**wherein**
two adjacent struts (11 and 11'), as seen along a lengthwise axis of a connection-body, as seen in cross-section, slope from a connection-pipe body (9) in a same direction, nevertheless disposed next to each other, that is, without lengthwise superimposition.

5. Water extraction connection-pipe in accordance with claim 1,
**wherein**
free ends (12 and/or 12') of struts (11 and/or 11') are staged in a step-like form and struts (11 and/or 11') engage, with a flat break in steps (14 and/or 14'), in an opening (4 and/or 4').

## Revendications

1. Embout d'évacuation d'eau (1) destiné à être monté dans une ouverture de passage d'un support, comportant un collet élargi radialement (8) destiné à prendre appui axialement sur l'élément de paroi entourant une ouverture (3), et des bras inclinés (11 ou 11'), répartis sur la périphérie du corps (9) de l'embout, dans une position éloignée de ce collet (8) et qui font saillie par rapport au corps (9) de l'embout et peuvent se déplacer élastiquement vers ce corps et possèdent des surfaces d'appui (13, 13') pour réaliser un appui axial dans le sens opposé,
caractérisé en ce
que l'embout d'évacuation d'eau (1) est utilisé en tant qu'élément de liaison entre deux ouvertures opposées (3,4 ou 4') d'un support creux (2), le collet d'extrémité (8) du corps de l'embout pouvant être appliqué, sur le côté intérieur d'un support creux (2), contre l'élément de paroi situé autour de l'ouverture (3), et l'extrémité libre des bras inclinés (11 ou 11'), dans le support (2), étant dirigée en direction de l'autre ouverture (4 ou 4') et pouvant prendre appui, sur le côté intérieur, contre l'élément de paroi entourant cette ouverture.

2. Embout d'évacuation d'eau selon la revendication 1, caractérisé en ce que plusieurs bras inclinés (11 ou 11'), qui sont respectivement opposés en coupe transversale, font saillie à partir du corps (9) de l'embout.

3. Embout d'évacuation d'eau selon l'une des revendications 1 ou 2, caractérisé en ce que plusieurs groupes de bras inclinés (11 et 11') sont disposés le long d'un axe longitudinal du corps (9) de l'embout.

4. Embout d'évacuation d'eau selon la revendication 3, caractérisé en ce que deux bras inclinés (11 et 11'), qui sont voisins le long d'un axe longitudinal du corps (9) de l'embout, font saillie à partir du corps (9) de l'embout, lorsqu'on regarde en coupe transversale, en étant disposés dans le même sens, mais côte-à-côte, c'est-à-dire sans recouvrement longitudinal.

5. Embout d'évacuation d'eau selon la revendication 1, caractérisé en ce que les extrémités libres (12 ou 12') des bras inclinés (11 ou 11') sont étagées en forme d'escalier et que les bras inclinés (11 ou 11') s'engagent, par une partie étagée en forme d'escalier (14 ou 14'), dans l'ouverture (4 ou 4').
